# EUROPEAN PATENT SPECIFICATION

(11) **EP 2 308 738 B1**
(45) Date of publication and mention of the grant of the patent: **03.07.2013**
(21) Application number: 09446506.9
(22) Date of filing: 09.10.2009
(51) Int. Cl.: B61G 5/00, B60D 1/60

(54) **Protective shroud for the coupler head of a train coupler**
Schutzkragen für den Kupplungskopf einer Zugkupplung
Coiffe de protection pour la tête d'attelage d'un train

(43) Date of publication of application: 13.04.2011
(73) Proprietor: Dellner Couplers AB, 791 95 Falun (SE)
(72) Inventor: Lindholm, Dan, 724 65, VÄSTERÅS (SE); Tärestam, P-G, 791 61, FALUN (SE)
(74) Representative: Rystedt, Per Hampus

(56) References cited:
- EP-A1- 1 350 703
- EP-A2- 0 870 667
- BE-A- 435 179
- DE-U1- 20 316 075

## Description

### TECHNICAL FIELD OF THE INVENTION

The present invention refers to an arrangement in a rail vehicle, and more specifically to a protective shroud arranged movable and controllable to cover and protect the coupler head of a central buffer coupler when the coupler is not in use, while retractable into the rail vehicle to permit access to the coupler head when the train coupler is to be connected to the coupler of an adjacent rail vehicle.

### BACKGROUND AND PRIOR ART

Similar arrangements are generally referred to as front covers or front hatches, although in practise these arrangements may be installed in both ends of a rail vehicle. The purpose of a front cover is to prevent snow/water, dirt and foreign objects from entering into an open front of the vehicle body, where intruding matter may hamper the operation of the coupler and equipment installed on the coupler.

A common type of front cover in rail vehicles includes a rigid front cowl usually made in glass reinforced plastics (GRP). The GRP front cowl is typically driven and remotely controlled for retraction into the vehicle body when access to the train coupler is desired. In order to accommodate the coupler head in the covering position, the GRP front cowl is designed with a bulbous shape that requires a corresponding storing space inside the vehicle body in the retracted position.

A shroud for a coupler head is previously known from EP publication no. 1350703, disclosing a shroud which is pivoted from a working or uncoupled position in which the shroud is arranged in an essentially vertical position in front of the coupler head, into an essentially horizontal rest or uncoupled position above the coupler. This solution is characterized through a positively controlled pivoting of the shroud about a pivot, which is fixed relative to the coupler, in result of retraction of the shroud into the vehicle body towards the rest position. The mechanism includes a linkage of fixed length, which makes the solution less adaptable to modifications on the coupler, and suffers from a bulbous and rigid cowl which occupies a corresponding head space in the retracted position of the shroud.

### SUMMARY OF THE INVENTION

An object of the present invention is to provide a shroud which is adapted for protection of the coupler head of a train coupler, and which occupies a substantially reduced storing space in the vehicle body in the retracted and non-covering position of the protective shroud.

This object is met in a protective shroud comprising the features recited in claim 1. Advantageous embodiments of the protective shroud are further specified in the subordinated claims.

Briefly, according to the present invention, the protective shroud for the coupler head of a train coupler comprises a deformable sheet of elastic material forming a cover element which is mounted at its periphery in a frame, and together with the frame pivotally supported and controlled to be pivoted about an axis transverse to a longitudinal axis of the train coupler between a relaxed non-covering position displaced from the coupler longitudinal axis, and a stretched covering position intersecting the coupler longitudinal axis at the front of the coupler head.

The protective shroud advantageously comprises a cover element made from a rubber mat or rubber cloth. Suitable rubber mat grades providing the required elasticity and ability to resist wear are available commercially.

According to a preferred embodiment of the invention, a cover element in a protective shroud for a coupler head of a rail vehicle comprises a sheet of rubber having a thickness in the range of up to about 10 mm. The cover element is preferably chosen from a range of rubber mat grades that provide unhampered operation at temperatures ranging from about -40° C to about + 130° C. A rubber mat grade having self-extinguishing properties if subjected to fire may advantageously be chosen for implementation in the protective shroud of the present invention.

Although a rubber mat or rubber cloth is presently preferred it will be realized that the elastic cover element may be formed of other materials providing similar and required properties. Any synthetic material providing the corresponding properties may alternatively be chosen for the cover element.

The protective shroud is driven and controlled for shifting between the covering/stretched position and the non-covering/relaxed position. To this purpose, a first actuator is arranged for retraction/extension of the protective shroud in the length direction of the train coupler, and a second actuator is arranged for pivoting the protective shroud. The movements of pivoting and retraction/ extension may be synchronized and performed simultaneously, albeit selective control of the two actuators is possible and would permit for separation of the pivoting and retraction/extension movements, if desired. The movements are typically driven by pneumatic actuators, but other drives would likewise be possible, such as electrically or hydraulically supplied actuators.

The protective shroud is in one end, preferably the upper end, pivotally supported on a first pivot defining a pivot axis transversely to the longitudinal direction of the train coupler. The first pivot is movable in the length direction of the train coupler, by being arranged on a carrier which is controlled by the first actuator for travel along a guide rail running in the length direction of the train coupler. The second actuator connects a second pivot, which is displaced from said end and located on one side of the protective shroud, with a third pivot arranged on the carrier and thus displaceable with the carrier along the guide rail upon actuation of the first actuator. It will be understood, that the second and third pivots define axis in parallel with the first pivot axis, and that all pivots are moved in the longitudinal direction of the train coupler upon operation of the first actuator.

Although it would be possible to arrange the above mechanism, including the guide rail, the carrier, actuators and the protective shroud, for mounting onto the vehicle chassis or to the vehicle body, it is preferred that the arrangement is supported on the train coupler, free from the vehicle structure. When being mounted on the train coupler, the protective shroud will maintain its position relative to the coupler head through any relative movement between the train coupler and the vehicle.

It is also preferred that the mechanism is supported on the train coupler in such position that the protective shroud is shiftable between a mainly vertical covering position at the front of the coupler head and a mainly horizontal non-covering position above the train coupler.

A shock plate, preferably comprising a sheet of metal, is advantageously mounted in the frame adjacent and behind the elastic cover element. The shock plate is arranged with an opening corresponding to and adapted, in the covering position of the protective shroud, for insertion there through of a structural element protruding from the coupler head, such as a guide cone or similar protruding structure. In the covering position, the elastic cover element is thus stretched and deformed in result of contact with the coupler head protruding through the opening of the shock plate. In the retracted position, the cover element is returned to a non-stretched or relaxed condition and provided support from the shock plate which prevents deflection of the cover element which would possibly cause interference with equipment carried on the coupler. In the extended, covering position, the shock plate provides shock protection against foreign objects that may enter through the open front of the vehicle body.

### SHORT DESCRIPTION OF THE DRAWINGS

The invention will be explained in more detail below, with reference made to the accompanying and only schematic drawings. In the drawings,
Fig. 1 is a side view showing a train coupler having a protective shroud according to the present invention in a stretched condition in the extended covering position;
Fig. 2 is a top view showing the protective shroud in the covering position;
Fig. 3 is a side view showing the protective shroud in a shifting sequence, and
Fig. 4 is a perspective view showing the protective shroud in a relaxed condition in a retracted non-covering position.

### DETAILED DESCRIPTION OF A PREFERRED EMBODIMENT

With reference to the drawings, a central buffer coupling or train coupler 1 reaches in longitudinal direction about a longitudinal axis from a mounting end 2, adapted for mounting in a rail vehicle chassis (not shown), to a coupler head 3 which is arranged for connection to the train coupler of a connecting rail vehicle. A guiding formation 4 protrudes from the front surface of the coupler head. Although illustrated herein to have a conical shape, the protruding element 4 shall be understood in a broader sense to encompass also other protruding shapes or structures arranged on the coupler head typically in order to effectuate alignment/ connection with the meeting coupler during coupling operations.

Although not being illustrated in the schematic drawings it should be understood that the coupler and the coupler head carry the usual connectors such as for hydraulics, pneumatics, electricity and communication that need protection from snow/water, dirt and undesired objects when the coupler and connectors are not in use, such as when the coupler is the front coupler of the leading vehicle in a multiple vehicle unit, or the aft coupler of the trailing vehicle in the train. To this purpose the present invention provides a protective shroud 5 which is retractable into the vehicle body when the coupler is in use and connected to the coupler of an adjacent rail vehicle, and which is extendable to assume a covering position intersecting the coupler longitudinal axis at the front of the coupler head, when the coupler is not in use.

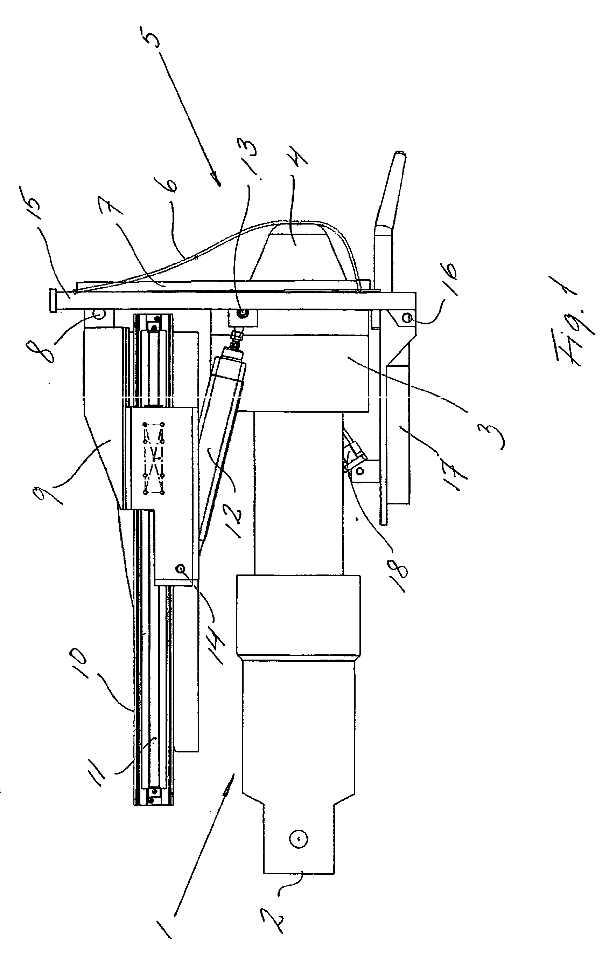

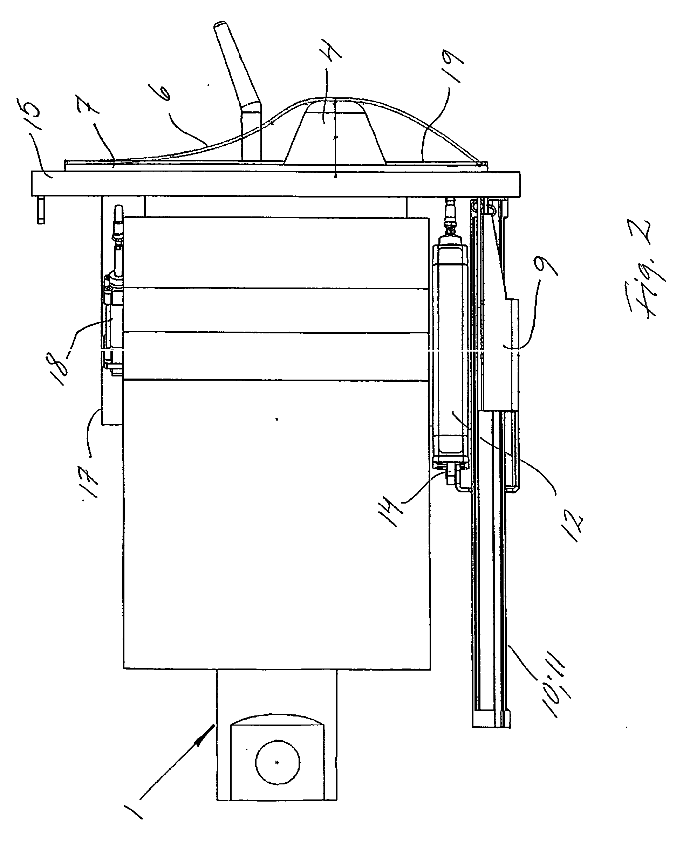

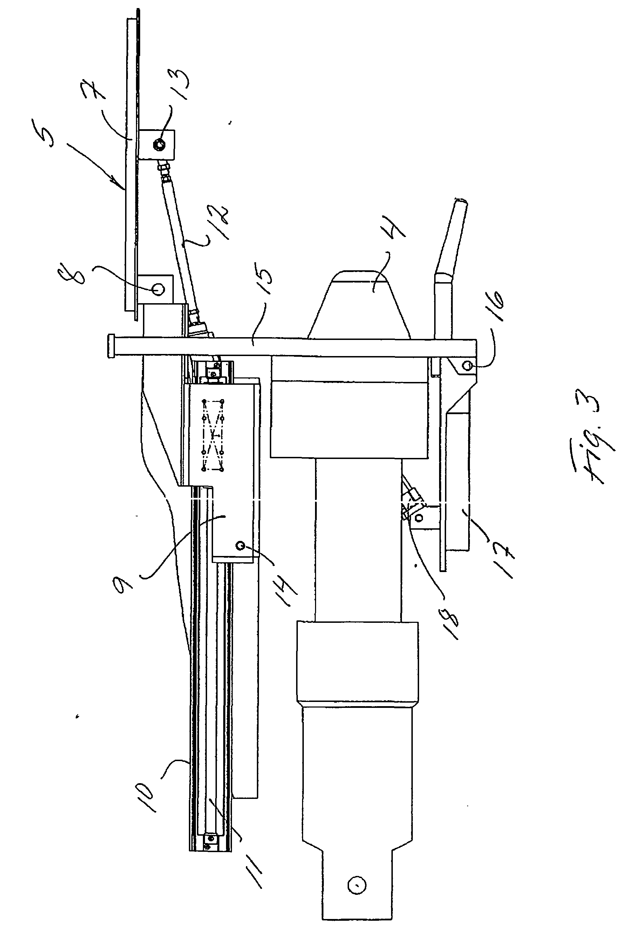

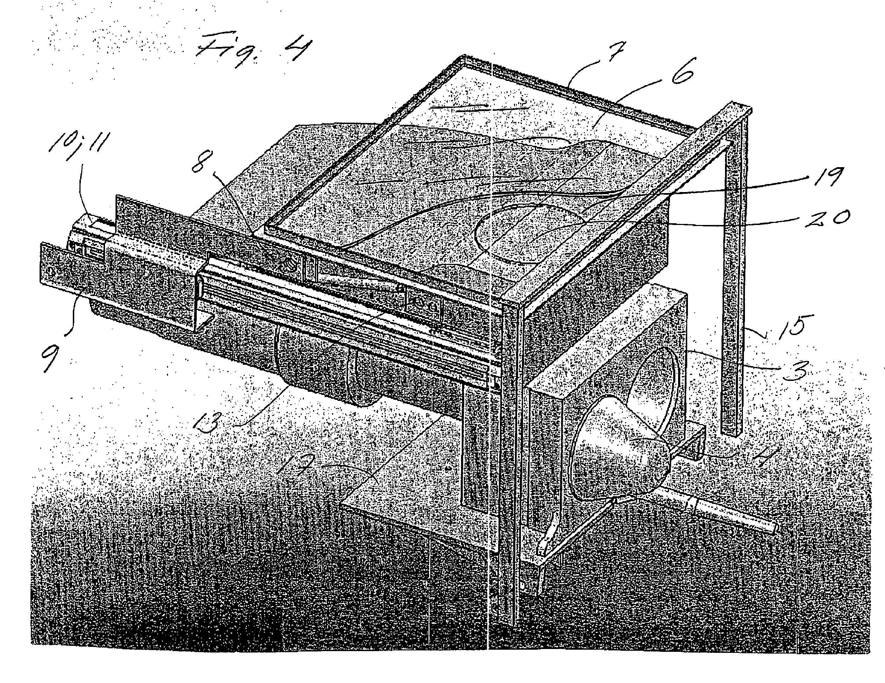

The protective shroud 5 of the present invention comprises a cover element 6 made of deformable and elastic material. Figures 1 and 2 illustrate the protective shroud in the covering position, wherein the cover element 6 is extended and deformed or stretched in contact with the coupler head or with an element 4 protruding from the coupler head. In other words, the cover element 6 thus assumes in the covering position a bulging or convex, outwardly cambered shape in result of the contact with the coupler head. Figure 4 shows the protective shroud in a fully retracted and non-covering position, and figure 3 shows the protective shroud in an intermediate position during an opening or a closing sequence. In the non-covering positions of figures 3 and 4, the elastic cover element 6 has returned to a non-stretched or relaxed and substantially planar condition in result of the elasticity of the material forming the cover element 6. It should be noted that, in figure 4, a portion of the cover element 6 is cut away to illustrate the underlying structures of the invention.

As previously discussed, the cover element 6 is advantageously made from a sheet of rubber having a thickness in the range of up to about 10 mm, such as ranging from 2 to 10 mm, or preferably having a thickness ranging from about 3 to about 6 mm. The cover element 6 is advantageously chosen from a range of rubber mat grades that provides unhampered operation at temperatures ranging from about - 40° C to about + 130° C.

The cover element 6 is supported at or about its periphery in a frame 7 which is movably arranged and driven and controlled between the extended position shown in figures 1-2, and the retracted position shown in figure 4. The frame 7 is in one and preferably its upper end pivotally hinged, at a first pivot 8, to a carrier 9 which is arranged to travel on a linear guide 10. A first actuator 11 moves the carrier 9 and frame 7 along the linear guide 10 in retraction and extension movements, in the longitudinal direction of the train coupler. In the illustrated embodiment, the first actuator is a pneumatically operated linear actuator.

Pivoting of the frame about the pivot 8, and thus about an axis transverse to the train coupler longitudinal axis, is accomplished by means of a second actuator 12 acting between the frame 7 and the carrier 9. The second actuator 12 connects a second pivot 13, which is displaced from said end of the frame and located on one side of the frame, with a third pivot 14 arranged on the carrier 9. The first, second and third pivots are thus moving with the carrier 9 upon operation of the first actuator 11. In the illustrated embodiment, the second actuator 12 is a pneumatic linear actuator.

It is preferred that the protective shroud is arranged to be retractable into the vehicle body above the train coupler 1, as illustrated in the drawings. However, it would of course alternatively be possible to arrange the protective shroud so as to be retractable on either side of the train coupler 1 if appropriate, considering available space in the vehicle body.

It is also preferred that the protective shroud and its associated mechanism for retraction and extension is supported on the train coupler 1, this way maintaining its position relative to the coupler head through any elevation and angular displacement of the train coupler with respect to the rail vehicle. The protective shroud may alternatively be mounted onto the vehicle chassis or onto the vehicle body.

In the illustrated and preferred embodiment, the protective shroud and its mechanism for shifting between the covering and non-covering positions is supported on the train coupler 1. More precisely, a forward end of the linear guide 10 is connected to a frame structure 15 which defines an opening that is covered by the protective shroud in its covering position. In practise an elastic bellows member, which is known per se and not illustrated in the drawings, bridges a gap between the frame 15 and the rim of an opening in the end of the vehicle body that houses the coupler arrangement.

The frame 15 is preferably arranged pivotable about a pivot 16 which is mounted on a base 17 that is supported underneath the train coupler 1, such as connected to the lower side of the coupler head 3, e.g. An actuator 18 is arranged between the base 17 and the frame 15, and controllable for tilting the frame 15 relative to the base 17 in a vertical plane along the coupler axis. Tilting of the frame 15 and the shroud mechanism supported thereon facilitates coupling and uncoupling operations.

The elastic cover element 6 is advantageously supported by a backing structure. A backing structure may be stationary arranged in the vehicle body, providing support against possible deflection of the elastic cover element in the retracted and relaxed position.

Alternatively and preferred, the backing structure is arranged on the frame 7. The backing structure may be realized as a metal skeleton, or even more preferred, produced from a sheet of metal which is formed into a shock plate 19 that is supported on the frame 7 adjacent and behind the elastic cover element 6. The shock plate 19 provides added shock protection in case of collision with smaller animals and other foreign objects.

The shock plate 19 has an opening 20 for insertion and accommodation of the protruding element 4 as the protective shroud is pivoted about pivot 8 into the covering position. The engagement of the protruding element 4 into the opening 20 may be utilized for fixation of the protective shroud in the covering position. By a proper dimensioning of the opening 20 with respect to the diameter of the protruding element 4, a retraction of the protective shroud in its pivoted and substantially vertical orientation results in a holding engagement which relieves the suspending structures from stresses.

Although typically the protective shroud is positively controlled by the pneumatic actuators in both covering and non-covering positions, a locking means may alternatively be arranged for the purpose of arresting the protective shroud in its position in a non-operative state of the actuators. A locking means may be realized as a type of snap lock means which is automatically released upon powering of the actuators for shifting movement, and which is arranged to be manually released in a non-operative state of the actuators.

### ADVANTAGES AND FEASIBLE MODIFICATIONS

It will be realized that the protective shroud of the present invention requires less storing space in the retracted non-covering position, as compared to the rigid GRP-cowl of prior art. It is also realized that the elastic cover element 6, when deformed in contact with the coupler head, is elastically stretched into an expanded and outwardly cambered shape which avoids any formation of pockets that might otherwise capture snow or dirt on the front of the cover element. A protective shroud as illustrated and described can also be designed with low-weight materials that require less energy in shifting between covering/ non-covering positions, and provides for simplified maintenance and exchange of a worn-out or damaged cover element 6, e.g.

It is further conceived that heating means can be installed on the frame 7, or even more preferred, installed on the shock plate 19 in order to avoid ice formation on the cover element 6.

Albeit being disclosed herein as covering an opening in the vehicle body in conjunction with a surrounding bellows member it should be realized, that a protective shroud according to the invention may alternatively be designed as the sole covering member for an opening made in the front or in the rear of a rail vehicle body.

## Claims

1. A protective shroud for a coupler head (3) of a train coupler (1), wherein the protective shroud is in one end pivotally supported and controllable to be pivoted about an axis (8) transverse to a longitudinal axis of the train coupler between a non-covering position displaced from the coupler longitudinal axis and a covering position intersecting the coupler longitudinal axis at the front of the coupler head, **characterized in that** the protective shroud comprises a deformable sheet of elastic material forming a cover element (6) which is mounted at its periphery in a frame (7), and suspended in the frame (7) for shifting movement between a relaxed non-covering position and a stretched covering position in contact with the coupler head.

2. The protective shroud of claim 1, **characterized in that** the elastic cover element (6) and the frame (7) are adapted to be supported on the train coupler (1), and in one end of the frame (7) pivotally journalled on a first pivot (8) that is mounted on a carrier (9) which is movable on a guide rail (10), running in parallel with the train coupler longitudinal axis, by actuation of a first actuator (11) through which the protective shroud is retractable and extendable in the length direction of the train coupler (1).

3. The protective shroud of claim 2, **characterized in that** the elastic cover element (6) and the frame (7) are pivotable about the first pivot (8) by actuation of a second actuator (12), connecting a second pivot (13) on the frame (7) with a third pivot (14) mounted on the carrier (9).

4. The protective shroud of claim 2 or 3, **characterized in that** the guide rail (10) is connected to a frame (15) defining an opening to be covered by the elastic cover element (6) and the frame (7) in the covering position, said frame (15) pivotally supported on the train coupler (1) and associated with an actuator (18) for tilting the frame (15).

5. The protective shroud of any preceding claim, **characterized in that** the elastic cover element (6) and the frame (7) are shiftable between a substantially horizontal orientation above the train coupler in the non-covering position, and a substantially vertical orientation at the front of the coupler head in the covering position.

6. The protective shroud of any preceding claim, **characterized in that** a shock plate (19) is mounted in the frame (7), adjacent the elastic cover element (6), the shock plate arranged with an opening (20) corresponding to and adapted, in the covering position of the protective shroud, for insertion there through of an element (4) protruding from the coupler head (3).

7. The protective shroud of claim 6, **characterized in that** the shock plate (19) is a sheet of metal.

8. The protective shroud of any preceding claim, **characterized in that** the elastic cover element (6) is a sheet of rubber.

9. The protective shroud of claim 8, **characterized in that** the cover element (6) is a sheet of rubber having a thickness in the range of up to about 10 mm, such as ranging from 2 to 10 mm, or preferably having a thickness ranging from about 3 to about 6 mm.

10. The protective shroud of claim 9, **characterized in that** the cover element (6) is a rubber mat chosen from a range of rubber mat grades that provides unhampered operation at temperatures ranging from about -40° C to about + 130° C.

11. The protective shroud of any of claims 6 to 10, **characterized in that** heating elements are arranged on the shock plate (19).

## Patentansprüche

1. Schutzhülle für einen Kupplungskopf (3) einer Zugkupplung (1), wobei die Schutzhülle in einem Ende drehbar gelagert und steuerbar ist, um um eine Achse (8) quer zu einer Längsachse der Zugkupplung zwischen einer von der Kupplungslängsachse versetzten Nicht-Abdeckstellung und einer die Kupplungsachse vorne am Kupplungskopf schneidenden Abdeckstellung gedreht zu werden, **dadurch gekennzeichnet, dass** die Schutzhülle einen verformbaren Bogen aus elastischem Material umfasst, der ein Abdeckelement (6) bildet, das an seinem Umfang in einem Rahmen (7) angebracht ist und zur Verschiebungsbewegung zwischen einer entspannten Nicht-Abdeckstellung und einer gedehnten Abdeckstellung in Kontakt mit dem Kupplungskopf in dem Rahmen (7) aufgehängt ist.

2. Schutzhülle nach Anspruch 1, **dadurch gekennzeichnet, dass** das elastische Abdeckelement (6) und der Rahmen (7) dazu angepasst sind, auf der Zugkupplung (1) gelagert zu werden, und in einem Ende des Rahmens (7) mit einen Zapfen an einem ersten Drehpunkt (8) drehbar befestigt zu werden, der auf einem Träger (9) angebracht ist, der durch Betätigung eines ersten Betätigungselements (11) auf einer Führungsschiene (10) beweglich ist, die parallel zur Zugkupplungs-Längsachse verläuft, wodurch die Schutzhülle in der Längsrichtung der Zugkupplung (1) einziehbar und ausfahrbar ist.

3. Schutzhülle nach Anspruch 2, **dadurch gekennzeichnet, dass** das elastische Abdeckelement (6) und der Rahmen (7) durch Betätigung eines zweiten Betätigungselements (12), das einen zweiten Drehpunkt (13) an dem Rahmen (7) mit einem an dem Träger (9) angebrachten dritten Drehpunkt (14) verbindet, um den ersten Drehpunkt (8) drehbar sind.

4. Schutzhülle nach Anspruch 2 oder 3, **dadurch gekennzeichnet, dass** die Führungsschiene (10) mit einem Rahmen (15) verbunden ist, der eine Öffnung definiert, die in der Abdeckstellung von dem elastischen Abdeckelement (6) und dem Rahmen (7) abzudecken ist, wobei der Rahmen (15) drehbar auf der Zugkupplung (1) gelagert und mit einem Betätigungselement (18) zum Kippen des Rahmens (15) assoziiert ist.

5. Schutzhülle nach einem der vorangehenden Ansprüche, **dadurch gekennzeichnet, dass** das elastische Abdeckelement (6) und der Rahmen (7) zwischen einer im Wesentlichen horizontalen Ausrichtung über der Zugkupplung in der Nicht-Abdeckstellung und einer im Wesentlichen vertikalen Ausrichtung vorne an dem Kupplungskopf in der Abdeckstellung verschiebbar sind.

6. Schutzhülle nach einem der vorangehenden Ansprüche, **dadurch gekennzeichnet, dass** eine Stoßplatte (19) benachbart dem elastischen Abdeckelement (6) in dem Rahmen (7) angebracht ist, wobei die Stoßplatte mit einer Öffnung (20) angeordnet ist, die in der Abdeckstellung der Schutzhülle zum Einführen dadurch hindurch eines von dem Kupplungskopf (3) vorstehenden Elements (4) angepasst ist.

7. Schutzhülle nach Anspruch 6, **dadurch gekennzeichnet, dass** es sich bei der Stoßplatte (19) um einen Bogen aus Metall handelt.

8. Schutzhülle nach einem der vorangehenden Ansprüche, **dadurch gekennzeichnet, dass** das es sich bei dem elastischen Abdeckelement (6) um einen Bogen aus Gummi handelt.

9. Schutzhülle nach Anspruch 8, **dadurch gekennzeichnet, dass** es sich bei dem Abdeckelement (6) um einen Bogen aus Gummi mit einer Dicke im Bereich von bis ungefähr 10 mm handelt, wie etwa im Bereich von 2 bis 10 mm oder bevorzugt mit einer Dicke im Bereich von ungefähr 3 bis ungefähr 6 mm.

10. Schutzhülle nach Anspruch 9, **dadurch gekennzeichnet, dass** es sich bei dem Abdeckelement (6) um eine Gummimatte handelt, die aus einem Bereich von Gummimattengüten ausgewählt ist, der ungehinderten Betrieb bei Temperaturen im Bereich von ungefähr -40 °C bis ungefähr +130 °C vorsieht.

11. Schutzhülle nach einem der Ansprüche 6 bis 10, **dadurch gekennzeichnet, dass** auf der Stoßplatte (19) Heizelemente angeordnet sind.

## Revendications

1. Coiffe de protection pour une tête (3) d'un attelage de train (1), dans laquelle la coiffe de protection est, à une extrémité, supportée à pivotement et peut être commandée pour pivoter autour d'un axe (8) transversalement à un axe longitudinal de l'attelage de train entre une position non couvrante décalée de l'axe longitudinal de l'attelage et une position couvrante coupant l'axe longitudinal de l'attelage devant la tête d'attelage, **caractérisée en ce que** la coiffe de protection comprend une feuille déformable de matériau élastique formant un élément couvrant (6) qui est monté, sur sa périphérie, dans un châssis (7) et suspendu dans le châssis (7) pour assurer un mouvement de déplacement entre une position non couvrante relâchée et une position couvrante déployée en contact avec la tête d'attelage.

2. Coiffe de protection selon la revendication 1, **caractérisée en ce que** l'élément couvrant élastique (6) et le châssis (7) sont à même d'être supportés sur l'attelage de train (1) et, à une extrémité du châssis (7), tourillonnés à pivotement sur un premier pivot (8) qui est monté sur un chariot (9) qui est mobile sur un rail de guidage (10) s'étendant parallèlement à l'axe longitudinal de l'attelage du train par actionnement d'un premier actionneur (11) par lequel la coiffe de protection peut être rétractée et déployée dans le sens de la longueur de l'attelage de train (1).

3. Coiffe protectrice selon la revendication 2, **caractérisée en ce que** l'élément couvrant élastique (6) et le châssis (7) peuvent pivoter autour du premier pivot (8) par actionnement d'un second actionneur (12) raccordant un deuxième pivot (13) sur le châssis (7) avec un troisième pivot (14) monté sur le chariot (9).

4. Coiffe de protection selon la revendication 2 ou la revendication 3, **caractérisée en ce que** le rail de guidage (10) est raccordé à un châssis (15) définissant une ouverture à recouvrir par l'élément couvrant élastique (6) et le châssis (7) en position couvrante, ledit châssis (15) étant supporté à pivotement sur l'attelage de train (1) et étant associé à un actionneur (18) pour incliner le châssis (15).

5. Coiffe de protection selon l'une quelconque des revendications précédentes, **caractérisée en ce que** l'élément couvrant élastique (6) et le châssis (7) peuvent être déplacés entre une orientation sensiblement horizontale au-dessus de l'attelage du train en position non couvrante et une orientation sensiblement verticale devant la tête de l'attelage en position couvrante.

6. Coiffe de protection selon l'une quelconque des revendications précédentes, **caractérisée en ce qu'**une plaque antichoc (19) est montée dans le châssis (7), adjacente à l'élément couvrant élastique (6), la plaque antichoc étant aménagée avec une ouverture (20) correspondant à un élément (4) faisant saillie de la tête d'attelage (3) et qui est à même, en position couvrante de la coiffe de protection, de s'insérer à travers celui-ci.

7. Coiffe de protection selon la revendication 6, **caractérisée en ce que** la plaque antichoc (19) est une tôle de métal.

8. Coiffe de protection selon l'une quelconque des revendications précédentes, **caractérisée en ce que** l'élément couvrant élastique (6) est une feuille de caoutchouc.

9. Coiffe de protection selon la revendication 8, **caractérisée en ce que** l'élément couvrant est une feuille de caoutchouc ayant une épaisseur dans la plage allant jusqu'à environ 10 mm, notamment dans la plage de 2 à 10 mm, ou ayant de préférence une épaisseur allant d'environ 3 à environ 6 mm.

10. Coiffe de protection selon la revendication 9, **caractérisée en ce que** l'élément couvrant (6) est un mat de caoutchouc choisi dans une plage de qualités de mat de caoutchouc qui permettent un fonctionnement sans problème à des températures allant d'environ -40 °C à environ +130 °C.

11. Coiffe de protection selon l'une quelconque des revendications 6 à 10, **caractérisée en ce que** des éléments chauffants sont aménagés sur la plaque antichoc (19).
